# EUROPÄISCHE PATENTSCHRIFT

(11) **EP 3 597 466 B1**
(45) Veröffentlichungstag und Bekanntmachung des Hinweises auf die Patenterteilung: **26.05.2021**
(21) Anmeldenummer: 19183179.1
(22) Anmeldetag: 28.06.2019
(51) Int. Cl.: B60K 15/03, B60K 15/063, B60K 1/00

(54) **NUTZFAHRZEUG ODER NUTZFAHRZEUGGESPANN MIT WASSERSTOFFDRUCKSPEICHER**
COMMERCIAL VEHICLE OR COMMERCIAL VEHICLE TRAIN WITH PRESSURISED HYDROGEN TANK
VÉHICULE UTILITAIRE OU ATTELAGE DE VÉHICULE UTILITAIRE POURVU DE RÉSERVOIR D'HYDROGÈNE SOUS PRESSION

(30) Priorität: 18.07.2018 DE 102018117356
(43) Veröffentlichungstag der Anmeldung: 22.01.2020
(73) Patentinhaber: MAN Truck & Bus SE, 80995 München (DE)
(72) Erfinder: Gutzeit, Reinhard, 82049 Pullach (DE)
(74) Vertreter: v. Bezold & Partner Patentanwälte - PartG mbB

(56) Entgegenhaltungen:
- EP-A1- 1 391 599
- WO-A1-2018/030931
- DE-A1- 4 211 688
- DE-A1- 10 108 713
- DE-A1- 10 343 194
- DE-A1-102011 103 989
- DE-A1-102013 110 203
- DE-A1-102014 005 290
- US-A1- 2018 086 227

## Beschreibung

Die Erfindung betrifft ein Nutzfahrzeug, vorzugsweise einen Lastkraftwagen, oder ein Nutzfahrzeuggespann, vorzugsweise einen Sattelzug oder einen Hängerzug.

Eine unmittelbare und nahtlose Umstellung auf einen emissionsfreien Antrieb für einen Fernverkehrs-Sattelzug scheitert bei der Verwendung von gasförmigen Wasserstoff an einem Gesamtkonzept zur Erzielung einer großen Reichweite ohne Tankstopp.

Aus der DE 10 2010 056 179 A1 ist ein Gespann bekannt. Das Gespann weist einen angetriebenen Zugkraftwagen mit wenigstens einem Antriebsaggregat auf. Das Gespann weist einen mit der Zugkraftwagen gekoppelten Anhänger auf. Das Gespann weist wenigstens eine Speichereinrichtung, mittels welcher Energie oder ein Medium zum Betreiben des Antriebsaggregats speicherbar ist, auf. Die Speichereinrichtung ist an dem Anhänger angeordnet. Die Speichereinrichtung kann zur Speicherung von Wasserstoffstoff geeignet sein.

Die EP 1 391 599 B1, die DE 10 2014 005 290 A1 und die US 2012/0152215 A1 offenbaren weitere Nutzfahrzeuge oder Nutzfahrzeuggespanne mit Speichereinrichtungen, die für Wasserstoff geeignet sein können.

Die DE 10 2013 110 203 A1 offenbart ein Tankmodul für einen Fahrzeuganhänger. Haltekonsolen können derart angeordnet sein, dass das Tankmodul mit einem Gastank zwischen Fahrzeuglängsträgern des Fahrzeuganhängers montierbar ist.

Die DE 10 2014 005 290 A1 offenbart ein Nutzfahrzeug mit einem Brennstoffspeicher zur Aufnahme von Brennstoff für eine Brennstoffzelle, wie beispielsweise Wasserstoff oder Methanol, Methansäure, Methan oder Synthesegas.

Die DE 10 2011 103 989 A1 offenbart eine Anordnung eines Betriebsstofftanks an einem Kraftfahrzeug, wobei der Betriebsstofftank in eine zentrale Betriebsstoffversorgungseinheit integriert ist. Die Betriebsstoffversorgungseinheit ist zwischen zwei Rahmenlängsträgem eines Fahrgestellrahmens in Leiterrahmenausführung angeordnet.

Der Erfindung liegt die Aufgabe zu Grunde, ein alternatives und/oder verbessertes Nutzfahrzeug und/oder Nutzfahrzeuggespann mit Wasserstoffdruckspeicher zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Es wird ein Nutzfahrzeuggespann (zum Beispiel Brennstoffzellen-Nutzfahrzeuggespann mit einer oder mehreren Brennstoffzellen), vorzugsweise ein Sattelzug oder ein Hängerzug, oder Nutzfahrzeug (zum Beispiel Brennstoffzellen-Nutzfahrzeug mit einer oder mehreren Brennstoffzellen), vorzugsweise ein Lastkraftwagen, vorgeschlagen. Das Nutzfahrzeuggespann oder das Nutzfahrzeug weist einen Leiterrahmen mit zwei parallelen Hauptlängsträgern auf. Das Nutzfahrzeug oder das Nutzfahrzeuggespann weist einen oder mehrere Wasserstoffdruckspeicher, der oder die zumindest teilweise auf Höhe der zwei parallelen Hauptlängsträger und zwischen den zwei parallelen Hauptlängsträgern angeordnet ist oder sind, auf.

Die Anordnung der Wasserstoffdruckspeicher zwischen den Hauptlängsträgern ermöglicht die Ausnutzung zusätzlichen, bisher ungenutzten Volumens zur Reichweitenerhöhung. Die Speicherung von Druckwasserstoff erfordert einen großen Raumbedarf. Die Energiedichte beträgt bei gasförmigen Wasserstoff (H2) bei 350 bar etwa 800 kWh/m3. Im Vergleich zum Dieselkraftstoff ist ein etwa achtfacher Raumbedarf erforderlich. Verbrenner-Fernverkehrszüge führen z. B. 1 m3 (1000 Liter) Dieselkraftstoff mit. Somit würde ein Volumen von z. B. 8 m3 Wasserstoff erforderlich. Dieses Volumen kann teilweise zwischen den Hauptlängsträgern gefunden werden. Damit ist die Anordnung der Wasserstoffdruckspeicher zwischen den Hauptlängsträgern ein wichtiger Bestandteil beim Aufbau eines leichten und bezüglich eines Verbrenner-Fernverkehrssattelzugs volumen- und reichweitenneutralen Brennstoffzellen-Fernverkehrssattelzugs.

Beispielsweise können die Wasserstoffdruckspeicher in Längsrichtung oder in Querrichtung des Nutzfahrzeugs oder des Nutzfahrzeuggespanns ausgerichtet sein.

In einem Ausführungsbeispiel ist der eine oder sind die mehreren Wasserstoffdruckspeicher bezüglich einer Vertikalrichtung im Wesentlichen bündig oder zurückversetzt zu den zwei parallelen Hauptlängsträgern angeordnet, vorzugsweise beidseitig (d. h. oben und unten). Alternativ oder zusätzlich erstreckt sich der eine oder erstrecken sich die mehreren Wasserstoffdruckspeicher bezüglich einer Querrichtung des Nutzfahrzeugs oder des Nutzfahrzeuggespanns von dem einen der zwei parallelen Hauptlängsträgern zu dem anderen der zwei parallelen Hauptlängsträger (zum Beispiel ausgerichtet in Längsrichtung oder in Querrichtung), vorzugsweise bis annähernd angrenzend an und/oder direkt benachbart zu den zwei parallelen Hauptlängsträgern. Damit kann das vorhandene Volumen zwischen den zwei Hauptlängsträgern annähernd vollständig für die Wasserstoffdruckspeicher genutzt werden.

In einem weiteren Ausführungsbeispiel ist der eine oder sind die mehreren Wasserstoffdruckspeicher bezüglich einer Vorwärtsfahrtrichtung zumindest teilweise vor einer Hinterachse, vorzugsweise eines Sattelaufliegers oder eines Anhängers, angeordnet. Alternativ oder zusätzlich ist der eine oder sind die mehreren Wasserstoffdruckspeicher bezüglich einer Vorwärtsfahrtrichtung zumindest teilweise hinter einer Hinterachse, vorzugsweise eines Sattelaufliegers oder eines Anhängers, angeordnet.

Das Nutzfahrzeuggespann oder das Nutzfahrzeug weist ferner einen oder mehrere weitere Wasserstoffdruckspeicher, die (zum Beispiel direkt) unterhalb des einen oder der mehreren Wasserstoffdruckspeicher und/oder (zum Beispiel direkt) unterhalb der zwei parallelen Hauptlängsträger angeordnet sind, auf. Damit kann beispielsweise auch das Volumen unterhalb des Leiterrahmens zur Aufnahme von Wasserstoffdruckspeichern genutzt werden, um das Gesamtvolumen und somit die Reichweite zu erhöhen.

Beispielsweise kann der eine oder können die mehreren weiteren Wasserstoffdruckspeicher in Längsrichtung oder in Querrichtung des Nutzfahrzeugs oder Nutzfahrzeuggespann ausgerichtet sein.

Der eine weitere oder die mehreren weiteren Wasserstoffdruckspeicher stehen über die zwei parallelen Hauptlängsträger in einer Querrichtung des Nutzfahrzeugs oder des Nutzfahrzeuggespanns über, vorzugsweise beidseitig. Alternativ oder zusätzlich kann sich der eine weitere oder können sich die mehreren weiteren Wasserstoffdruckspeicher im Wesentlichen über eine gesamte Breite des Nutzfahrzeugs oder des Nutzfahrzeuggespanns erstrecken.

In einem Ausführungsbeispiel ist der eine weitere oder sind die mehreren weiteren Wasserstoffdruckspeicher bezüglich einer Vorwärtsfahrtrichtung zumindest teilweise vor einer Hinterachse, vorzugsweise eines Sattelaufliegers oder eines Anhängers, angeordnet. Alternativ oder zusätzlich ist der eine weitere oder sind die mehreren weiteren Wasserstoffdruckspeicher bezüglich einer Vorwärtsfahrtrichtung zumindest teilweise hinter einer Hinterachse, vorzugsweise eines Sattelaufliegers oder eines Anhängers, angeordnet.

In einer Ausführungsform weist ein Sattelauflieger oder ein Anhänger den Leiterrahmen auf. Alternativ oder zusätzlich weist ein Lastkraftwagen, vorzugsweise ein Sattelzugfahrzeug (z. B. aufweisend eine Sattelplatte) oder ein Hängerzugfahrzeug (z. B. aufweisend eine Anhängerkupplung), den Leiterrahmen.

In einer weiteren Ausführungsform weist das Nutzfahrzeuggespann oder das Nutzfahrzeug ferner eine Brennstoffzellenvorrichtung auf, die in Fluidverbindung zu dem einen oder den mehreren Wasserstoffdruckspeichern und/oder dem einen oder den mehreren weiteren Wasserstoffdruckspeichern steht und/oder zum Erzeugen von elektrischer Energie ausgebildet ist. Alternativ oder zusätzlich weist das Nutzfahrzeuggespann oder das Nutzfahrzeug eine Elektromotorvorrichtung auf, die zum Aufnehmen von elektrischer Energie mit der Brennstoffzellenvorrichtung verbunden und/oder zum Antreiben des Nutzfahrzeugs oder des Nutzfahrzeuggespanns ausgebildet ist. Vorzugsweise sind die Brennstoffzellenvorrichtung und die Elektromotorvorrichtung die einzige Antriebsquelle des Nutzfahrzeugs oder des Nutzfahrzeuggespanns.

Beispielsweise kann die Brennstoffzellenvorrichtung eine oder mehrere Brennstoffzellen aufweisen.

Vorzugsweise kann die Brennstoffzellenvorrichtung als Wasserstoff-Sauerstoff-Brennstoffzellenvorrichtung ausgebildet sein.

Beispielsweise kann die Elektromotorvorrichtung einen oder mehrere Elektromotoren aufweisen.

Vorzugsweise kann Elektromotorvorrichtung antreibend mit Rädern des Nutzfahrzeugs oder des Nutzfahrzeuggespanns verbunden sein, vorzugsweise mit Rädern einer Hinterachse des Nutzfahrzeugs, des Sattelzugfahrzeugs oder des Hängerzugfahrzeugs.

In einer Weiterbildung ist die Brennstoffzellenvorrichtung unterhalb eines Fahrerhauses des Nutzfahrzeugs oder eines Sattelzugfahrzeugs des Nutzfahrzeuggespanns oder eines Hängerzugfahrzeugs des Nutzfahrzeuggespanns angeordnet. Alternativ oder zusätzlich ist die Elektromotorvorrichtung zwischen Rädern einer Hinterachse des Nutzfahrzeugs oder eines Sattelzugfahrzeugs des Nutzfahrzeuggespanns oder eines Hängerzugfahrzeugs des Nutzfahrzeuggespanns angeordnet.

Es ist beispielsweise auch möglich, dass die Elektromotorvorrichtung Radnabenmotoren an Rädern der Hinterachse des Nutzfahrzeugs, des Sattelzugfahrzeugs oder des Hängerzugfahrzeugs aufweist.

In einem Ausführungsbeispiel ist das Nutzfahrzeuggespann als ein Sattelzug mit einem Sattelzugfahrzeug und einem Sattelauflieger ausgebildet. Der Sattelauflieger weist den Leiterrahmen, den einen oder die mehreren Wasserstoffdruckspeicher und vorzugsweise den einen oder die mehreren weiteren Wasserstoffdruckspeicher auf. Vorzugsweise weist das Sattelzugfahrzeug einen oder mehrere weitere andere Wasserstoffdruckspeicher auf, vorzugsweise zwischen einer Vorderachse des Sattelzugfahrzeugs und einer Hinterachse des Sattelzugfahrzeugs und/oder unterhalb eines Rahmens des Sattelzugfahrzeugs. Damit kann ein Gesamtkonzept für einen leichten und bezüglich eines Verbrenner-Fernverkehrssattelzugs volumen- und reichweitenneutralen Brennstoffzellen-Fernverkehrssattelzug geschaffen werden. Bei einem Speicherdruck von beispielsweise 300 oder 350 bar, der mit noch moderaten Wandstärken für die Wasserstoffdruckspeicher einhergeht, können so Reichweiten von 3000 km und mehr erzielt werden.

Es ist möglich, dass der oder die weiteren anderen Wasserstoffdruckspeicher in Längsrichtung oder in Querrichtung des Nutzfahrzeugs oder des Nutzfahrzeuggespanns ausgerichtet sind.

In einer Weiterbildung steht der oder stehen die weiteren anderen Wasserstoffdruckspeicher über die zwei parallele Hauptlängsträger des Leiterrahmens des Sattelaufliegers in einer Querrichtung des Nutzfahrzeuggespanns über, vorzugsweise beidseitig.

In einem Ausführungsbeispiel weist der oder weisen die weiteren anderen Wasserstoffdruckspeicher insgesamt ein Volumen von (ca.) 1,5 m3, zum Beispiel 1,65 m3, auf, und/oder sind vorzugsweise für einen Speicherdruck von bis zu (ca.) 300 bar oder (ca.) 350 bar ausgelegt.

In einem weiteren Ausführungsbeispiel sind sowohl der eine oder die mehreren Wasserstoffdruckspeicher als auch der eine oder die mehreren weiteren Wasserstoffdruckspeicher bezüglich einer Vorwärtsfahrtrichtung ausschließlich vor einer Hinterachse des Sattelaufliegers angeordnet, vorzugsweise im gesamten Raum zwischen einem Heck des Sattelzugfahrzeugs und Radachsen des Sattelaufliegers.

In einem weiteren Ausführungsbeispiel weisen der eine oder die mehreren Wasserstoffdruckspeicher und der eine oder die mehreren weiteren Wasserstoffdruckspeicher insgesamt ein Volumen von (ca.) 6 m3, vorzugsweise 6,5 m3, auf, und/oder sind vorzugsweise für einen Speicherdruck von bis zu (ca.) 350 bar oder (ca.) 300 bar ausgelegt.

In einem weiteren Ausführungsbeispiel sind sowohl der eine oder die mehreren Wasserstoffdruckspeicher als auch der eine oder die mehreren weiteren Wasserstoffdruckspeicher bezüglich einer Vorwärtsfahrtrichtung teilweise vor, vorzugsweise im gesamten Raum zwischen einem Heck des Sattelzugfahrzeugs und Radachsen des Sattelaufliegers, und teilweise hinter einer Hinterachse des Sattelaufliegers angeordnet.

In einem weiteren Ausführungsbeispiel weisen der eine oder die mehreren Wasserstoffdruckspeicher und der eine oder die mehreren weiteren Wasserstoffdruckspeicher insgesamt ein Volumen von (ca.) 9 m3, vorzugsweise 9,4 m3 auf, und/oder sind vorzugsweise für einen Speicherdruck von bis zu (ca.) 350 bar oder (ca.) 300 bar ausgelegt.

In einer Ausführungsform weist die Sattelzugmaschine die Brennstoffzellenvorrichtung und/oder die Elektromotorvorrichtung auf, vorzugsweise als einzige Antriebsquelle der Sattelzugmaschine.

In einer weiteren Ausführungsform weist das Nutzfahrzeuggespann oder das Nutzfahrzeug eine biegsame Hochdruck-Wasserstoffverbindungsleitung auf, die zwischen einem sattelzugfahrzeugfesten Verbindungsstutzen und einem sattelaufliegerfesten Verbindungsstutzen angeschlossen oder anschließbar ist, vorzugsweise mit selbstverschließenden Kupplungen.

In einer Weiterbildung weist die biegsame Hochdruck-Wasserstoffverbindungsleitung bei Geradeausfahrt eine liegende und/oder wendelförmige U-Form auf.

In einer weiteren Ausführungsform sind der sattelzugfahrzeugfeste Verbindungsstutzen und der sattelaufliegerfeste Verbindungsstutzen mit einem Höhenunterschied zueinander angeordnet. Vorzugsweise ist der sattelaufliegerfeste Verbindungsstutzen höher als der sattelzugfahrzeugfeste Verbindungsstutzen angeordnet.

In einer weiteren Ausführungsform ist die biegsame Hochdruck-Wasserstoffverbindungsleitung, der sattelzugfahrzeugfeste Verbindungsstutzen und/oder der sattelaufliegerfeste Verbindungsstutzen direkt benachbart zu oder angrenzend an eine Sattelkupplung des Sattelzugfahrzeugs und/oder des Sattelaufliegers angeordnet.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Abbildung einer Seitenansicht eines beispielhaften Sattelzugs gemäß der vorliegenden Offenbarung;
- Figur 2: eine schematische Abbildung einer Seitenansicht eines weiteren beispielhaften Sattelzugs gemäß der vorliegenden Offenbarung;
- Figur 3: eine schematische Abbildung einer Seitenansicht eines weiteren beispielhaften Sattelzugs gemäß der vorliegenden Offenbarung;
- Figur 4: eine schematische Abbildung einer Seitenansicht eines weiteren beispielhaften Sattelzugs gemäß der vorliegenden Offenbarung;
- Figur 5: eine schematische Abbildung einer Draufsicht auf einen Sattelzug;
- Figur 6: eine schematische Abbildung einer Hochdruck-Wasserstoffverbindungsleitung zwischen Sattelzufahrzeug und Sattelauflieger bei Geradeausfahrt in einer Draufsicht; und
- Figur 7: eine schematische Abbildung der Hochdruck-Wasserstoffverbindungsleitung bei einer 90° Stellung zwischen Sattelzufahrzeug und Sattelauflieger in einer Draufsicht.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Die vorliegende Offenbarung bezieht sich insbesondere auf ein Gesamtkonzept für einen Fernverkehrs-Sattelzug, der auf gasförmiger Druckwasserstoffbasis angetrieben ist, und auch große Reichweiten von 3000 km und mehr erreichen kann. Das hier offenbarte Gesamtkonzept zielt insbesondere auf einen leichten und im Vergleich zu Verbrenner-Nutzfahrzeuggespannen volumen- und reichweitenneutralen Fernverkehrs-Sattelzug ab. Es wurde allerdings erkannt, dass einzelne Aspekte dieses Gesamtkonzepts isoliert verwendet werden können, um jegliches Nutzfahrzeug und Nutzfahrzeuggespann, das auf Druckwasserstoffbasis angetrieben wird, zu verbessern. Hierzu zählt insbesondere die Anordnung von Wasserstoffdruckspeichern zwischen Hauptlängsträgern eines Leiterrahmens, die Anordnung der weiteren Wasserstoffdruckspeicher darunter, sowie die mit diesen im Zusammenhang stehenden Merkmale. Diese können so nicht nur bei einem Sattelauflieger sondern auch bei einem Nutzfahrzeug oder einem Anhänger vorteilhaft genutzt werden.

Das hier offenbart Gesamtkonzept schlägt vorzugsweise vor, den vorhandenen, nicht für Ladung nutzbaren Gesamtraum des Fernverkehrs-Sattelzuges insbesondere für die Druckspeicherung des gasförmigen Wasserstoffs maximal auszunutzen. So kann ein möglichst niedriger Speicherhochdruck, der mit etwas größerem Speichervolumen verbunden ist, erzielt werden. Der Gesamtvorteil besteht dadurch in leichteren Gasdruckbehältern mit geringerer Wandstärke. Zudem ergibt sich bei der Bereitstellung des gasförmigen Wasserstoffs ein niedrigerer Kompressionsdruck. Als Richtwert für den Wasserstoffspeicherdruck im Nutzfahrzeuggespann wird deshalb vorzugsweise von 350 bar oder 300 bar, und nicht von bspw. 700 bar, ausgegangen. Dennoch wird darauf hingewiesen, dass die hier beispielhaft für 300 bar oder 350 bar offenbarten Techniken gleichermaßen bei höheren oder niedrigeren Speicherdrücken angewendet werden können.

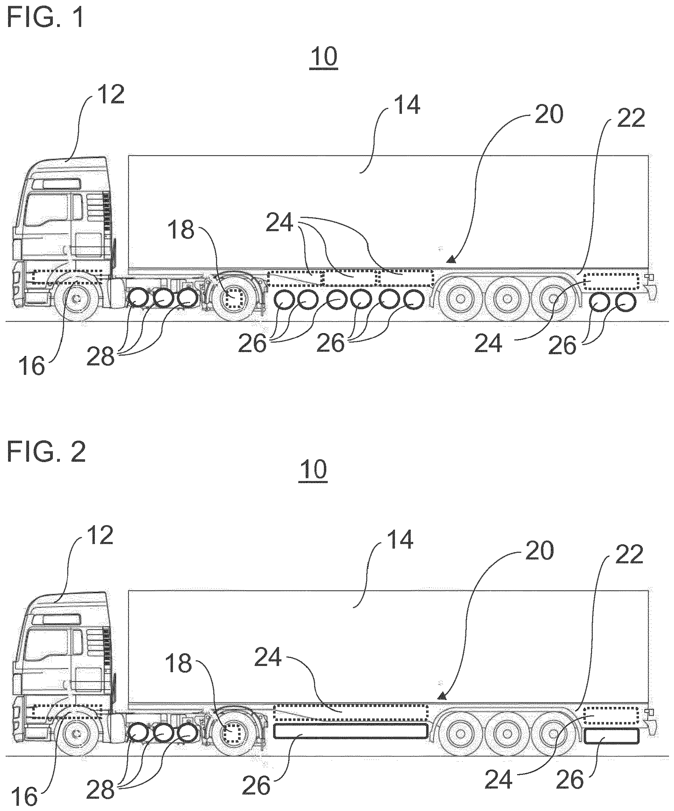

Die Figur 1 zeigt ein Nutzfahrzeuggespann 10. Das Nutzfahrzeuggespann 10 weist ein Nutzfahrzeug 12 auf. Das Nutzfahrzeug 12 ist als Lastkraftwagen, insbesondere als Sattelzugfahrzeug, ausgebildet. Das Nutzfahrzeuggespann 10 weist einen Sattelauflieger 14 auf. Der Sattelauflieger 14 ist an das Sattelzugfahrzeug zum Bilden eines Sattelzugs gekoppelt. Die Kopplung erfolgt durch Kopplung eines Führungszapfens des Sattelaufliegers 14 mit einer Sattelplatte des Sattelzugfahrzeugs. Es ist allerdings beispielsweise auch möglich, dass das Nutzfahrzeuggespann 10 als ein Hängerzug mit Hängerzugfahrzeug und daran beispielsweise mittels Anhängerkupplung und Deichsel gekoppelten Anhänger ausgebildet ist (nicht dargestellt). Der Sattelzug kann auch als Lang-LKW in gebräuchlichen Kombinationen aufgebaut sein.

Das Nutzfahrzeug 12 weist eine Brennstoffzellenvorrichtung 16 auf. Die Brennstoffzellenvorrichtung 16 kann eine oder mehrere Wasserstoff-Sauerstoff-Brennstoffzellen zum Erzeugen von elektrischer Energie, insbesondere in Form von Gleichstrom, aufweisen. Zum Erzeugen elektrischer Energie ist die Brennstoffzellenvorrichtung 16 mit Wasserstoff zu versorgen. Die Brennstoffzellenvorrichtung 16 ist unterhalb eines Fahrerhauses des Nutzfahrzeugs 12, zum Beispiel oberhalb einer Vorderachse des Nutzfahrzeugs 12, angeordnet.

Das Nutzfahrzeug 12 weist eine Elektromotorvorrichtung 18 auf. Die Elektromotorvorrichtung 18 kann im Bereich einer Hinterachse des Nutzfahrzeugs 12 angeordnet sein. Die Elektromotorvorrichtung 18 kann einen oder mehrere Elektromotoren, zum Beispiel jeweils mit Getriebe, aufweisen, die antreibend mit Rädern der Hinterachse des Nutzfahrzeugs 12 verbunden sind. Die Elektromotorvorrichtung 18 kann beispielsweise zwei Elektromotoren aufweisen, die zwischen den Rädern der Hinterachse des Nutzfahrzeugs 12 und/oder oberhalb der Hinterachse angeordnet sind. Andere Anordnungen sind auch möglich, zum Beispiel Elektro-Radnabenmotoren. Die Elektromotorvorrichtung 18 ist mit der Brennstoffzellenvorrichtung 16 zum Aufnehmen von elektrischer Energie verbunden.

Die Brennstoffzellenvorrichtung 16 und die Elektromotorvorrichtung 18 können insbesondere die einzige Antriebskraftquelle des Nutzfahrzeugs 12 sein. Das heißt, das Nutzfahrzeug 12 kann beispielsweise keine Verbrennungskraftmaschine usw. aufweisen. Durch den Verzicht auf die Verbrennungskraftmaschine kann die Brennstoffzellenvorrichtung 16 in dem freigewordenen Raum angeordnet sein.

Der Sattelauflieger 14 bietet unterhalb seiner Ladefläche zwischen der Radienbegrenzung des hinteren Endes des als Sattelzugfahrzeug ausgebildeten Nutzfahrzeugs 12 einen großzügigen Freiraum. Hier lassen sich beispielsweise ein oder mehrere Wasserstoffdrucktanks anordnen, die zum Beispiel für eine große Reichweite von 3000 km erforderlich werden.

Der Sattelauflieger 14 weist einen Leiterrahmen 20 auf. Der Leiterrahmen 20 stützt einen Aufbau des Sattelaufliegers 14. Der Leiterrahmen 20 weist zwei parallele Hauptlängsträger 22 auf (wovon nur einer in der Seitenansicht von Figur 1 sichtbar ist). Die zwei parallelen Hauptlängsträger 22 sind durch mehrere Querträger (nicht dargestellt) zum Bilden des Leiterrahmens 20 fest miteinander verbunden. Die zwei parallelen Hauptlängsträger 22 erstrecken sich im Wesentlichen entlang einer gesamten Länge des Sattelaufliegers 14. In einem die Sattelzugmaschine überspannenden Bereich können die zwei parallelen Hauptlängsträger 22 beispielsweise abgekröpft sein, wie in Figur 1 dargestellt ist.

Der Sattelauflieger 14 weist mehrere Wasserstoffdruckspeicher 24 auf (gestrichelt in Figur 1 dargestellt). Die Wasserstoffdruckspeicher 24 sind über ein nicht dargestelltes Versorgungsleitungssystem mit der Brennstoffzellenvorrichtung 16 zum Zuführen von Wasserstoff verbunden.

Die Wasserstoffdruckspeicher 24 sind auf Höhe des Leiterrahmens 20 angeordnet. Die Wasserstoffdruckspeicher 24 können an dem Leiterrahmen 20 befestigt sein. Die Wasserstoffdruckspeicher 24 sind zwischen den beiden parallelen Hauptlängsträgern 22 auf Höhe der Hauptlängsträger 22 angeordnet.

Die Wasserstoffdruckspeicher 24 können in einer Vertikalrichtung betrachtet oben bündig oder (zum Beispiel ein wenig) zurückversetzt zu den Hauptlängsträgern 22 angeordnet sein. Die Wasserstoffdruckspeicher 24 können in der Vertikalrichtung betrachtet unten bündig, (zum Beispiel ein wenig) überstehend oder (zum Beispiel ein wenig) zurückversetzt zu den Hauptlängsträgern 22 angeordnet sein.

Die Wasserstoffdruckspeicher 24 erstrecken sich bezüglich einer Querrichtung des Nutzfahrzeugs oder des Nutzfahrzeuggespanns von dem einen der zwei parallelen Hauptlängsträgern 22 zu dem anderen der zwei parallelen Hauptlängsträger 22, sodass vorzugsweise im Wesentlichen kein ungenutzter Raum, bis auf beispielsweise einen Sicherheitsabstand, zwischen den Hauptlängsträgern 22 und den Wasserstoffdruckspeichern 24 frei bleibt. Vorzugsweise sind die Wasserstoffdruckspeicher 24 annähernd angrenzend an die zwei parallelen Hauptlängsträger 22 angeordnet.

In der dargestellten Ausführungsform von Figur 1 sind drei Wasserstoffdruckspeicher 24 in Reihe vor den Radachsen des Sattelaufliegers 14 und ein Wasserstoffdruckspeicher 24 hinter den Radachsen des Sattelaufliegers 14 angeordnet. In Querrichtung können weitere Wasserstoffdruckspeicher 24 vorgesehen sein. In der dargestellten Ausführungsform von Figur 1 sind die Wasserstoffdruckspeicher 24 ferner in einer Längsrichtung des Sattelaufliegers 14 ausgerichtet. Eine andere Anzahl der Wasserstoffdruckspeicher 24 und/oder eine andere Ausrichtung ist ebenfalls möglich.

Der Sattelauflieger 14 weist mehrere weitere Wasserstoffdruckspeicher 26 auf. Die weiteren Wasserstoffdruckspeicher 26 sind über ein nicht dargestelltes Versorgungsleitungssystem mit der Brennstoffzellenvorrichtung 16 zum Zuführen von Wasserstoff verbunden.

Die Wasserstoffdruckspeicher 26 sind direkt unterhalb des Leiterrahmens 20, insbesondere der Hauptlängsträger 22, angeordnet. Die weiteren Wasserstoffdruckspeicher 26 können beispielsweise an dem Leiterrahmen 20 befestigt sein. Die weiteren Wasserstoffdruckspeicher 26 sind direkt unterhalb der Wasserstoffdruckspeicher 24 angeordnet.

Die weiteren Wasserstoffdruckspeicher 26 sind derart dimensioniert, dass sie über die zwei parallelen Hauptlängsträger 22 in einer Querrichtung des Nutzfahrzeuggespanns 10 überstehen, und zwar vorzugsweise beidseitig. Beispielsweise können die weiteren Wasserstoffdruckspeicher 26 annähernd bündig oder leicht zurückversetzt bezüglich des Aufbaus des Sattelaufliegers 14 sein.

In der dargestellten Ausführungsform von Figur 1 sind sechs weitere Wasserstoffdruckspeicher 26 vor den Radachsen des Sattelaufliegers 14 und zwei weitere Wasserstoffdruckspeicher 26 hinter den Radachsen des Sattelaufliegers 14 angeordnet. In der dargestellten Ausführungsform von Figur 1 sind die weiteren Wasserstoffdruckspeicher 26 ferner in einer Querrichtung des Sattelaufliegers 14 ausgerichtet. Eine andere Anzahl der weiteren Wasserstoffdruckspeicher 26 und/oder eine andere Ausrichtung ist ebenfalls möglich.

Unter Berücksichtigung der üblichen Abmessungen von Leiterrahmen für Sattelauflieger, wie in Figur 1 dargestellt ist, ermöglichen die Wasserstoffdruckspeicher 24 und die weiteren Wasserstoffdruckspeicher 26 ein Gesamtvolumen von mehr als 9 m3, insbesondere ca. 9,4 m3. Das Gesamtvolumen setzt sich zusammen aus einem ersten Teilvolumen von rund 6,5 m3 durch die Wasserstoffdruckspeicher 24 und die weiteren Wasserstoffdruckspeicher 26 vor den Radachsen des Sattelaufliegers 14. Hinter den Radachsen des Sattelaufliegers 14 ergibt sich ein zweites Teilvolumen von rund 2,9 m3 durch die Wasserstoffdruckspeicher 24 und die weitere Wasserstoffdruckspeicher 26.

Zusätzlich kann das Nutzfahrzeug 12 weitere andere Wasserstoffdruckspeicher 28 aufweisen. Die weiteren anderen Wasserstoffdruckspeicher 28 sind über ein nicht dargestelltes Versorgungsleitungssystem mit der Brennstoffzellenvorrichtung 16 zum Zuführen von Wasserstoff verbunden.

Die weiteren anderen Wasserstoffdruckspeicher 28 können insbesondere in einem Raum angeordnet sein, in dem normalerweise die Kardanwelle bei Systeme mit Verbrennungskraftmaschine angeordnet wäre. Die weiteren anderen Wasserstoffdruckspeicher 28 können insbesondere unterhalb eines Rahmens des Nutzfahrzeugs 12 angeordnet und/oder in einer Querrichtung des Nutzfahrzeugs 12 ausgerichtet sein. Eine andere Anordnung und/oder eine andere Anzahl als in Figur 1 für die weiteren anderen Wasserstoffdruckspeicher 28 dargestellt, ist auch möglich.

Unter Berücksichtigung der üblichen Abmessungen von Sattelzugfahrzeugen, wie in Figur 1 dargestellt ist, ermöglichen die weiteren anderen Wasserstoffdruckspeicher 28 ein zusätzliches Volumen von mehr als 1,5 m³, insbesondere ca. 1,65 m³.

Insgesamt ergibt sich somit ein Gesamtvolumen für die Speicherung von Wasserstoff von insgesamt 11,05 m3 durch die Wasserstoffdruckspeicher 24, die weiteren Wasserstoffdruckspeicher 26 und die weiteren anderen Wasserstoffdruckspeicher 28. Mit auf 350 bar komprimiertem Wasserstoff lässt sich hiermit eine Fernverkehrsreichweite von 3000 km gut erreichen. Bei einer Speicherdruckabsenkung auf zum Beispiel 300 bar und dem damit verbundenen ansteigenden Wasserstoffvolumen können noch immer sehr hohe Fernverkehrsreichweiten erreicht werden. Die Speicherdruckabsenkung kann jedoch vorteilhafterweise geringere Wandstärken und damit ein geringeres Gewicht für die Wasserstoffdruckspeicher 24, die weiteren Wasserstoffdruckspeicher 26 und/oder die weiteren anderen Wasserstoffdruckspeicher 28 ermöglichen.

Die Figur 2 zeigt ein weiteres Ausführungsbeispiel ähnlich zu dem Ausführungsbeispiel von Figur 1. Im Ausführungsbeispiel von Figur 2 sind statt mehrerer vergleichsweise kleiner Wasserstoffdruckspeicher 24 und weiterer Wasserstoffdruckspeicher 26 in der Anzahl weniger, aber größere Wasserstoffdruckspeicher 24 und weitere Wasserstoffdruckspeicher 26 vorgesehen.

Die Wasserstoffdruckspeicher 24 und die weiteren Wasserstoffdruckspeicher 26 können vorzugsweise im Wesentlichen im gesamten Raum zwischen einem Heck des Sattelzugfahrzeugs und Radachsen (der vordersten der Hinterachsen) des Sattelaufliegers 14 angeordnet sein. Die Wasserstoffdruckspeicher 24 und die weiteren Wasserstoffdruckspeicher 26 können sich insbesondere bis direkt angrenzend und/oder direkt benachbart zu dem Heck des Sattelzugfahrzeugs erstrecken. Die Wasserstoffdruckspeicher 24 und die weiteren Wasserstoffdruckspeicher 26 können sich ferner insbesondere bis direkt angrenzend und/oder direkt benachbart zu den Radachsen (der vordersten der Hinterachsen) des Sattelaufliegers 14 erstrecken. Selbiges kann für die Wasserstoffdruckspeicher 24 und die weiteren Wasserstoffdruckspeicher 26 zwischen dem Heck des Sattelzugfahrzeugs und den Radachsen des Sattelaufliegers 14 in den Ausführungsformen der Figuren 1, 3 und 4 gelten.

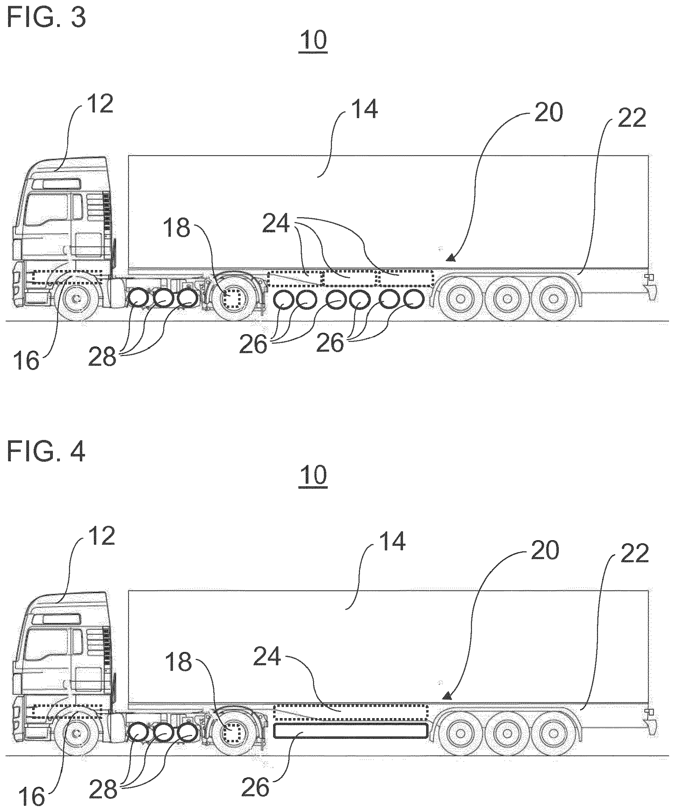

Die Figur 3 zeigt ein weiteres Ausführungsbeispiel ähnlich zu den Ausführungsbeispielen von Figur 1 und Figur 2. Im Ausführungsbeispiel von Figur 3 sind hinter den Radachsen des Sattelaufliegers 14 keine Wasserstoffdruckspeicher angeordnet. Dies kann beispielsweise aus Sicherheitsgründen sinnvoll sein, insbesondere unter Berücksichtigung der Gefahr von Auffahrunfälle.

Selbst im Ausführungsbeispiel von Figur 3 lässt sich ein Gesamtvolumen zum Speichern von Druckwasserstoff von insgesamt ungefähr 8,15 m3 erreichen (1,65 m3 durch das Nutzfahrzeug 12 und 6,5 m3 durch den Sattelauflieger 14). Bei einem Speicherdruck von 350 bar lässt sich auch hiermit noch eine Fernverkehrsreichweite von 3000 km erreichen.

Die Figur 4 zeigt ein weiteres Ausführungsbeispiel ähnlich zu dem Ausführungsbeispiel von Figur 3. Im Ausführungsbeispiel von Figur 2 sind statt mehrerer vergleichsweise kleiner Wasserstoffdruckspeicher 24 und weiterer Wasserstoffdruckspeicher 26 in der Anzahl weniger, aber größere Wasserstoffdruckspeicher 24 und weitere Wasserstoffdruckspeicher 26 vorgesehen.

Bei den gezeigten Ausführungsbeispielen kann ein normalerweise unterhalb des Rahmens des Nutzfahrzeugs 12 angeordnetes Reserverad beispielsweise an die Fahrzeugfront unter das Fahrerhaus versetzt werden.

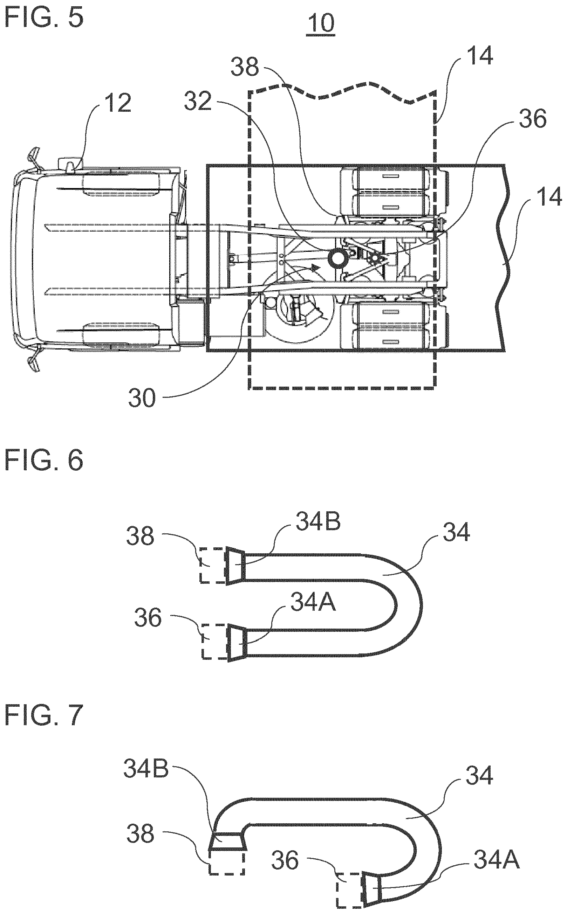

Nachfolgend ist unter Bezugnahme auf die Figuren 5 bis 7 eine beispielhafte Ausführung für eine Verbindungsleitungskopplung zwischen dem Sattelauflieger 14 und dem Sattelzugfahrzeug zum Zuführen von Wasserstoff zu der Brennstoffzellenvorrichtung 16 beschrieben.

Die Figur 5 zeigt das als Sattelzugfahrzeug ausgebildete Nutzfahrzeug 12 sowie rein schematisch den Sattelauflieger 14, einmal ausgerichtet mit dem Sattelzugfahrzeug (durchgezogene Linie) und einmal im 90° Winkel dazu (gestrichelte Linie).

Der Sattelauflieger 14 kann über eine Sattelkupplung 30 an das Sattelzugfahrzeug angekoppelt werden. Die Sattelkupplung 30 weist eine nicht näher dargestellte, sattelzugfahrzeugseitige Sattelplatte und einen sattelaufliegerseitigen Führungszapfen (Kin-Pin) 32 auf.

Nach Ankopplung des Sattelaufliegers 14 an das Sattelzugfahrzeug mittels der Sattelkupplung 30 sind die Wasserstoffdruckspeicher 24 und die weiteren Wasserstoffdruckspeicher 26 des Sattelaufliegers 14 (siehe Figuren 1 bis 4) mit einem Versorgungsleitungssystem des Sattelzugfahrzeugs zu verbinden. Beispielsweise können die weiteren anderen Wasserstoffdruckspeicher 28 des Sattelzugfahrzeugs mit den Wasserstoffdruckspeichern 24 und den weiteren Wasserstoffdruckspeichern 26 des Sattelaufliegers 14 über eine oder mehrere Hochdruck-Wasserstoffverbindungsleitungen 34 (siehe Figuren 6 und 7), zum Beispiel Schlauchleitungen, verbunden werden.

Die Hochdruck-Wasserstoffverbindungsleitung 34 ist biegsam. Die Hochdruck-Wasserstoffverbindungsleitung 34 ist mittels eines ersten Anschlusses 34A (siehe Figuren 6 und 7) an einen sattelzugfahrzeugfesten Verbindungsstutzen 36 koppelbar. Die Hochdruck-Wasserstoffverbindungsleitung 34 ist mittels eines zweiten Anschlusses 34B (siehe Figuren 6 und 7) an einen sattelaufliegerfesten Verbindungsstutzen 38 koppelbar. In Figur 5 ist der Verbindungsstutzen 38 schematisch nur für den Fall mit 90° Winkel zwischen Nutzfahrzeug 12 und Sattelauflieger 14 dargestellt. Die Kopplungen können zum Beispiel mechanisch über jeweils eine selbstverschließende Kupplung erfolgen. Die Entsperrung der Verbindungsstutzen 36, 38 kann beispielsweise jeweils über ein handbetätigtes Ventil oder über ein (Elektro-) Magnetventil erfolgen.

Es wird vorgeschlagen, die Verbindungstutzen 36, 38 sowie die Hochdruck-Wasserstoffverbindungsleitung(en) 34 möglichst nahe der Sattelkupplung 30 zu positionieren. Damit können die hochdruckbelasteten Wasserstoffverbindungsleitungen 34 möglichst kurz gehalten werden.

Es kann ferner vorgesehen sein, dass die Verbindungstutzen 36, 38 (und damit die Anschlüsse 34A und 34B) einen Höhenunterschied zueinander aufweisen. Damit kann die Hochdruck-Wasserstoffverbindungsleitung 34 die geometrische Weglängenänderung beim Abbiegen usw. ohne einzuknicken ausführen, siehe Figur 6 für Geradeausfahrt und Figur 7 für Abbiegen um 90°. Vorzugsweise ist der Verbindungsstutzen 38 und damit der Anschluss 34B höher angeordnet als der Verbindungsstutzen 36 und damit der Anschluss 34A. Die Hochdruck-Wasserstoffverbindungsleitung 34 kann sich zwischen den Anschlüssen 34A und 34B U-förmig (bezogen auf eine Geradeausfahrt) beziehen. Zum Ermöglichen des Höhenunterschieds kann sich die Hochdruck-Wasserstoffverbindungsleitung 34 zudem wendelförmige erstrecken.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 10: Nutzfahrzeuggespann
- 12: Nutzfahrzeug
- 14: Sattelauflieger
- 16: Brennstoffzellenvorrichtung
- 18: Elektromotorvorrichtung
- 20: Leiterrahmen
- 22: Hauptlängsträger
- 24: Wasserstoffdruckspeicher
- 26: Weitere Wasserstoffdruckspeicher
- 28: Weitere andere Wasserstoffdruckspeicher
- 30: Sattelkupplung
- 32: Führungszapfen
- 34: Hochdruck-Wasserstoffverbindungsleitung
- 34A: Erster Anschluss
- 34B: Zweiter Anschluss
- 36: Sattelzugfahrzeugfester Verbindungsstutzen
- 38: Sattelaufliegerfester Verbindungsstutzen

## Patentansprüche

1. Nutzfahrzeuggespann (10), vorzugsweise Sattelzug oder Hängerzug, oder Nutzfahrzeug (12), vorzugsweise Lastkraftwagen, aufweisend:
einen Leiterrahmen (20) mit zwei parallelen Hauptlängsträgern (22);
einen oder mehrere Wasserstoffdruckspeicher (24), der oder die zumindest teilweise auf Höhe der zwei parallelen Hauptlängsträger (22) und zwischen den zwei parallelen Hauptlängsträgern (22) angeordnet ist oder sind; und
einen oder mehrere weitere Wasserstoffdruckspeicher (26), die unterhalb des einen oder der mehreren Wasserstoffdruckspeicher (24) und unterhalb der zwei parallelen Hauptlängsträger (22) angeordnet sind;
wobei der eine oder die mehreren weiteren Wasserstoffdruckspeicher (24) über die zwei parallelen Hauptlängsträger (22) in einer Querrichtung des Nutzfahrzeugs (12) oder des Nutzfahrzeuggespanns (10) überstehen, vorzugsweise beidseitig, und/oder der eine oder die mehreren weiteren Wasserstoffdruckspeicher (24) sich im Wesentlichen über eine gesamte Breite des Nutzfahrzeugs (12) oder des Nutzfahrzeuggespanns (10) erstrecken.

2. Nutzfahrzeuggespann (10) oder Nutzfahrzeug (12) nach Anspruch 1, wobei:
der eine oder die mehreren Wasserstoffdruckspeicher (24) bezüglich einer Vertikalrichtung im Wesentlichen bündig oder zurückversetzt zu den zwei parallelen Hauptlängsträgern (22) angeordnet ist oder sind, vorzugsweise beidseitig; und/oder
der eine oder die mehreren Wasserstoffdruckspeicher (24) bezüglich einer Querrichtung des Nutzfahrzeugs (12) oder des Nutzfahrzeuggespanns (10) sich von dem einen der zwei parallelen Hauptlängsträgern (22) zu dem anderen der zwei parallelen Hauptlängsträger (22) erstreckt, vorzugsweise bis angrenzend an und/oder direkt benachbart zu den zwei parallelen Hauptlängsträgern (22).

3. Nutzfahrzeuggespann (10) oder Nutzfahrzeug (12) nach Anspruch 1 oder Anspruch 2, wobei:
der eine oder die mehreren Wasserstoffdruckspeicher (24) bezüglich einer Vorwärtsfahrtrichtung zumindest teilweise vor einer Hinterachse, vorzugsweise eines Sattelaufliegers (14) oder eines Anhängers, angeordnet sind; und/oder
der eine oder die mehreren Wasserstoffdruckspeicher (24) bezüglich einer Vorwärtsfahrtrichtung zumindest teilweise hinter einer Hinterachse, vorzugsweise eines Sattelaufliegers (14) oder eines Anhängers, angeordnet sind.

4. Nutzfahrzeuggespann (10) oder Nutzfahrzeug (12) nach einem der vorherigen Ansprüche, wobei:
der eine oder die mehreren weiteren Wasserstoffdruckspeicher (26) bezüglich einer Vorwärtsfahrtrichtung zumindest teilweise vor einer Hinterachse, vorzugsweise eines Sattelaufliegers (14) oder eines Anhängers, angeordnet sind; und/oder
der eine oder die mehreren weiteren Wasserstoffdruckspeicher (26) bezüglich einer Vorwärtsfahrtrichtung zumindest teilweise hinter einer Hinterachse, vorzugsweise eines Sattelaufliegers (14) oder eines Anhängers, angeordnet sind.

5. Nutzfahrzeuggespann (10) oder Nutzfahrzeug (12) nach einem der vorherigen Ansprüche, wobei:
ein Sattelauflieger (14) oder ein Anhänger den Leiterrahmen (20) aufweist; oder
ein Lastkraftwagen, vorzugsweise ein Sattelzugfahrzeug oder ein Hängerzugfahrzeug, den Leiterrahmen (20) aufweist.

6. Nutzfahrzeuggespann (10) oder Nutzfahrzeug (12) nach einem der vorherigen Ansprüche, ferner aufweisend:
eine Brennstoffzellenvorrichtung (16), die in Fluidverbindung zu dem einen oder den mehreren Wasserstoffdruckspeichern (24) steht und zum Erzeugen von elektrischer Energie ausgebildet ist; und
eine Elektromotorvorrichtung (18), die zum Aufnehmen von elektrischer Energie mit der Brennstoffzellenvorrichtung (16) verbunden und zum Antreiben des Nutzfahrzeuggespanns (10) oder des Nutzfahrzeugs (12) ausgebildet ist, wobei vorzugsweise:
die Brennstoffzellenvorrichtung (16) und die Elektromotorvorrichtung (18) die einzige Antriebsquelle des Nutzfahrzeugs (12) oder des Nutzfahrzeuggespanns (10) sind.

7. Nutzfahrzeuggespann (10) oder Nutzfahrzeug (12) nach Anspruch 6, wobei:
die Brennstoffzellenvorrichtung (16) unterhalb eines Fahrerhauses des Nutzfahrzeugs (12) oder eines Sattelzugfahrzeugs des Nutzfahrzeuggespanns (10) oder eines Hängerzugfahrzeugs des Nutzfahrzeuggespanns (10) angeordnet ist; und/oder
die Elektromotorvorrichtung (18) zwischen Rädern einer Hinterachse des Nutzfahrzeugs (12) oder eines Sattelzugfahrzeugs des Nutzfahrzeuggespanns (10) oder eines Hängerzugfahrzeugs des Nutzfahrzeuggespanns (10) angeordnet ist.

8. Nutzfahrzeuggespann (10) nach einem der vorherigen Ansprüche, wobei:
das Nutzfahrzeuggespann (10) als ein Sattelzug mit einem Sattelzugfahrzeug (12) und einem Sattelauflieger (14) ausgebildet ist;
der Sattelauflieger (14) den Leiterrahmen (20), den einen oder die mehreren Wasserstoffdruckspeicher (14), und vorzugsweise:
das Sattelzugfahrzeug (12) einen oder mehrere weitere andere Wasserstoffdruckspeicher (28) aufweist, vorzugsweise zwischen einer Vorderachse des Sattelzugfahrzeugs (12) und einer Hinterachse des Sattelzugfahrzeugs (12) und/oder unterhalb eines Rahmens des Sattelzugfahrzeugs (12).

9. Nutzfahrzeuggespann (10) nach Anspruch 8, wobei:
der oder die weiteren anderen Wasserstoffdruckspeicher (28) über zwei parallele Hauptlängsträger eines Leiterrahmens (20) des Sattelaufliegers (14) in einer Querrichtung des Nutzfahrzeuggespanns (10) überstehen, vorzugsweise beidseitig; und/oder
der oder die weiteren anderen Wasserstoffdruckspeicher (28) insgesamt ein Volumen von 1,5 m3 aufweisen, und vorzugsweise für einen Speicherdruck von bis zu 300 bar oder 350 bar ausgelegt sind.

10. Nutzfahrzeuggespann nach Anspruch 8 oder Anspruch 9, wobei:
sowohl der eine oder die mehreren Wasserstoffdruckspeicher (24) als auch der eine oder die mehreren weiteren Wasserstoffdruckspeicher (26) bezüglich einer Vorwärtsfahrtrichtung ausschließlich vor einer Hinterachse des Sattelaufliegers (14) angeordnet sind, vorzugsweise im gesamten Raum zwischen einem Heck des Sattelzugfahrzeugs (12) und Radachsen des Sattelaufliegers (14), und/oder insgesamt ein Volumen von 6 m3, vorzugsweise 6,5 m3, aufweisen, und vorzugsweise für einen Speicherdruck von bis zu 350 bar oder 300 bar ausgelegt sind; oder
sowohl der eine oder die mehreren Wasserstoffdruckspeicher (24) als auch der eine oder die mehreren weiteren Wasserstoffdruckspeicher (26) bezüglich einer Vorwärtsfahrtrichtung teilweise vor, vorzugsweise im gesamten Raum zwischen einem Heck des Sattelzugfahrzeugs (12) und Radachsen des Sattelaufliegers (14), und teilweise hinter einer Hinterachse des Sattelaufliegers (14) angeordnet sind und/oder insgesamt ein Volumen von 9 m3, vorzugsweise 9,4 m3 aufweisen, und vorzugsweise für einen Speicherdruck von bis zu 350 bar oder 300 bar ausgelegt sind.

11. Nutzfahrzeuggespann (10) nach einem der Ansprüche 8 bis 10, wobei:
die Sattelzugmaschine (12) die Brennstoffzellenvorrichtung (16) und die Elektromotorvorrichtung (18) aufweist, vorzugsweise als einzige Antriebsquelle der Sattelzugmaschine (12).

12. Nutzfahrzeuggespann (10) nach einem der vorherigen Ansprüche oder Nutzfahrzeug (12) nach einem der Ansprüche 1 bis 7, ferner aufweisend:
eine biegsame Hochdruck-Wasserstoffverbindungsleitung (34), die zwischen einem sattelzugfahrzeugfesten Verbindungsstutzen (36) und einem sattelaufliegerfesten Verbindungsstutzen (38) angeschlossen oder anschließbar ist, vorzugsweise mit selbstverschließenden Kupplungen.

13. Nutzfahrzeuggespann (10) oder Nutzfahrzeug (12) nach Anspruch 12, wobei:
die biegsame Hochdruck-Wasserstoffverbindungsleitung (34) bei Geradeausfahrt eine liegende und/oder wendelförmige U-Form aufweist; und/oder
der sattelzugfahrzeugfeste Verbindungsstutzen (36) und der sattelaufliegerfeste Verbindungsstutzen (38) mit einem Höhenunterschied zueinander angeordnet sind, vorzugsweise der sattelaufliegerfeste Verbindungsstutzen (38) höher als der sattelzugfahrzeugfeste Verbindungsstutzen (36) angeordnet ist, und/oder
die biegsame Hochdruck-Wasserstoffverbindungsleitung (34), der sattelzugfahrzeugfeste Verbindungsstutzen (36) und/oder der sattelaufliegerfeste Verbindungsstutzen (38) direkt benachbart zu oder angrenzend an eine Sattelkupplung (30) des Sattelzugfahrzeugs (12) und/oder des Sattelaufliegers (14) angeordnet ist.

## Claims

1. A utility vehicle train (10), preferably semitrailer train or truck-trailer combination, or utility vehicle (12), preferably heavy goods vehicle, comprising:
a ladder frame (20) with two parallel main longitudinal members (22);
one or more hydrogen pressure accumulators (24) which is or are arranged at least partially at the height of the two parallel main longitudinal members (22) and between the two parallel main longitudinal members (22); and
one or more further hydrogen pressure accumulators (26) which are arranged below the one or more hydrogen pressure accumulators (24) and below the two parallel main longitudinal members (22) ;
wherein the one or more further hydrogen pressure accumulators (24) project beyond the two parallel main longitudinal members (22) in a transverse direction of the utility vehicle (12) or of the utility vehicle train (10), preferably to both sides, and/or the one or more hydrogen pressure accumulators (24) extend substantially over an entire width of the utility vehicle (12) or of the utility vehicle train (10).

2. The utility vehicle train (10) or utility vehicle (12) according to Claim 1, wherein:
the one or more hydrogen pressure accumulators (24) is or are, with respect to a vertical direction, arranged substantially flush with or set back in relation to the two parallel main longitudinal members (22), preferably at both sides; and/or
the one or more hydrogen pressure accumulators (24) extend(s), with respect to a transverse direction of the utility vehicle (12) or of the utility vehicle train (10), from one of the two parallel main longitudinal members (22) to the other of the two parallel main longitudinal members (22), preferably as far as a point adjoining and/or directly adjacent to the two parallel main longitudinal members (22).

3. The utility vehicle train (10) or utility vehicle (12) according to Claim 1 or Claim 2, wherein:
the one or more hydrogen pressure accumulators (24) are, with respect to a forward direction of travel, arranged at least partially in front of a rear axle, preferably of a semitrailer (14) or of a trailer; and/or
the one or more hydrogen pressure accumulators (24) are, with respect to a forward direction of travel, arranged at least partially behind a rear axle, preferably of a semitrailer (14) or of a trailer.

4. The utility vehicle train (10) or utility vehicle (12) according to any of the preceding claims, wherein:
the one or more further hydrogen pressure accumulators (26) are, with respect to a forward direction of travel, arranged at least partially in front of a rear axle, preferably of a semitrailer (14) or of a trailer; and/or
the one or more further hydrogen pressure accumulators (26) are, with respect to a forward direction of travel, arranged at least partially behind a rear axle, preferably of a semitrailer (14) or of a trailer.

5. The utility vehicle train (10) or utility vehicle (12) according to any of the preceding claims, wherein:
a semitrailer (14) or a trailer has the ladder frame (20); or
a heavy goods vehicle, preferably a semitrailer train tractor or truck-trailer combination tractor, has the ladder frame (20).

6. The utility vehicle train (10) or utility vehicle (12) according to any of the preceding claims, furthermore comprising:
a fuel cell device (16) which is fluidically connected to the one or more hydrogen pressure accumulators (24) and which is designed to generate electrical energy; and
an electric motor device (18) which is connected, for the purposes of receiving electrical energy, to the fuel cell device (16) and which is designed to drive the utility vehicle train (10) or the utility vehicle (12), wherein, preferably:
the fuel cell device (16) and the electric motor device (18) are the sole drive source of the utility vehicle (12) or of the utility vehicle train (10).

7. The utility vehicle train (10) or utility vehicle (12) according to Claim 6, wherein:
the fuel cell device (16) is arranged below a driver's cab of the utility vehicle (12) or of a semitrailer train tractor of the utility vehicle train (10) or of a truck-trailer combination tractor of the utility vehicle train (10); and/or
the electric motor device (18) is arranged between wheels of a rear axle of the utility vehicle (12) or of a semitrailer train tractor of the utility vehicle train (10) or of a truck-trailer combination tractor of the utility vehicle train (10) .

8. The utility vehicle train (10) according to any of the preceding claims, wherein:
the utility vehicle train (10) is in the form of a semitrailer train with a semitrailer train tractor (12) and a semitrailer (14);
the semitrailer (14) the ladder frame (20), the one or more hydrogen pressure accumulators (14), and preferably:
the semitrailer train tractor (12) has one or more further other hydrogen pressure accumulators (28), preferably between a front axle of the semitrailer train tractor (12) and a rear axle of the semitrailer train tractor (12) and/or below a frame of the semitrailer train tractor (12).

9. The utility vehicle train (10) according to Claim 8, wherein:
the one or more further other hydrogen pressure accumulators (28) project beyond two parallel main longitudinal members of a ladder frame (20) of the semitrailer (14) in a transverse direction of the utility vehicle train (10), preferably to both sides; and/or
the one or more further other hydrogen pressure accumulators (28) have a total volume of 1.5 m3, and are preferably configured for an accumulator pressure of up to 300 bar or 350 bar.

10. The utility vehicle train according to Claim 8 or Claim 9, wherein:
both the one or more hydrogen pressure accumulators (24) and the one or more further hydrogen pressure accumulators (26) are, with respect to a forward direction of travel, arranged exclusively in front of a rear axle of the semitrailer (14), preferably in the entire space between a rear end of the semitrailer train tractor (12) and wheel axles of the semitrailer (14), and/or have a total volume of 6 m3, preferably 6.5 m3, and are preferably configured for an accumulator pressure of up to 350 bar or 300 bar; or
both the one or more hydrogen pressure accumulators (24) and the one or more further hydrogen pressure accumulators (26) are, with respect to a forward direction of travel, arranged partially in front of, preferably in the entire space between a rear end of the semitrailer train tractor (12) and wheel axles of the semitrailer (14), and partially behind a rear axle of the semitrailer (14), and/or have a total volume of 9 m3, preferably 9.4 m3, and are preferably configured for an accumulator pressure of up to 350 bar or 300 bar.

11. The utility vehicle train (10) according to any of Claims 8 to 10, wherein:
the semitrailer train tractor (12) has the fuel cell device (16) and the electric motor device (18), preferably as the sole drive source of the semitrailer train tractor (12).

12. The utility vehicle train (10) according to any of the preceding claims or utility vehicle (12) according to any of Claims 1 to 7, furthermore comprising:
a flexible high-pressure hydrogen connecting line (34) which is connected or connectable, preferably by means of self-closing couplings, between a connecting piece (36) fixed to the semitrailer train tractor and a connecting piece (38) fixed to the semitrailer.

13. The utility vehicle train (10) or utility vehicle (12) according to Claim 12, wherein:
the flexible high-pressure hydrogen connecting line (34) has a horizontal and/or helical U shape during straight-ahead travel; and/or
the connecting piece (36) fixed to the semitrailer train tractor and the connecting piece (38) fixed to the semitrailer are arranged with a height difference in relation to one another, preferably the connecting piece (38) fixed to the semitrailer is arranged higher than the connecting piece (36) fixed to the semitrailer train tractor, and/or
the flexible high-pressure hydrogen connecting line (34), the connecting piece (36) fixed the semitrailer train tractor and/or the connecting piece (38) fixed to the semitrailer is arranged directly adjacent to, or so as to adjoin, a semitrailer coupling (30) of the semitrailer train tractor (12) and/or of the semitrailer (14).

## Revendications

1. Attelage de véhicule utilitaire (10), de préférence train routier articulé ou camion remorque, ou véhicule utilitaire (12), de préférence poids lourd, présentant :
un châssis en échelle (20) doté de deux longerons principaux parallèles (22) ;
un ou plusieurs réservoirs d'hydrogène sous pression (24) qui est/sont disposé(s) au moins en partie à la hauteur des deux longerons principaux parallèles (22) et entre les deux longerons principaux parallèles (22) ; et
un ou plusieurs réservoirs d'hydrogène sous pression (26) supplémentaires qui est/sont disposé(s) au-dessous dudit un ou des plusieurs réservoirs d'hydrogène sous pression (24) et au-dessous des deux longerons principaux parallèles (22) ;
ledit un ou les plusieurs réservoirs d'hydrogène sous pression (24) supplémentaires dépassant des deux longerons principaux parallèles (22) dans une direction transversale du véhicule utilitaire (12) ou de l'attelage de véhicule utilitaire (10), de préférence des deux côtés, et/ou ledit un ou les plusieurs réservoirs d'hydrogène sous pression (24) supplémentaires s'étendant substantiellement sur toute la largeur du véhicule utilitaire (12) ou de l'attelage de véhicule utilitaire (10).

2. Attelage de véhicule utilitaire (10) ou véhicule utilitaire (12) selon la revendication 1, dans lequel :
ledit un ou les plusieurs réservoirs d'hydrogène sous pression (24) est/sont disposé(s) par rapport à une direction verticale substantiellement en affleurement ou en retrait par rapport aux deux longerons principaux parallèles (22), de préférence des deux côtés ; et/ou
ledit un ou les plusieurs réservoirs d'hydrogène sous pression (24) s'étendant par rapport à une direction transversale du véhicule utilitaire (12) ou de l'attelage de véhicule utilitaire (10) dudit un des deux longerons principaux parallèles (22) audit autre des deux longerons principaux parallèles (22), de préférence jusqu'à être adjacent et/ou directement contigu aux deux longerons principaux parallèles (22).

3. Attelage de véhicule utilitaire (10) ou véhicule utilitaire (12) selon la revendication 1 ou 2, dans lequel :
ledit un ou les plusieurs réservoirs d'hydrogène sous pression (24) est/sont disposé(s) par rapport à une direction de marche avant au moins en partie devant un essieu arrière, de préférence d'une semi-remorque (14) ou d'une remorque ; et/ou
ledit un ou les plusieurs réservoirs d'hydrogène sous pression (24) est/sont disposé(s) par rapport à une direction de marche avant au moins en partie derrière un essieu arrière, de préférence d'une semi-remorque (14) ou d'une remorque.

4. Attelage de véhicule utilitaire (10) ou véhicule utilitaire (12) selon l'une quelconque des revendications précédentes, dans lequel :
ledit un ou les plusieurs réservoirs d'hydrogène sous pression (26) supplémentaires est/sont disposé(s) par rapport à une direction de marche avant au moins en partie devant un essieu arrière, de préférence d'une semi-remorque (14) ou d'une remorque ; et/ou
ledit un ou les plusieurs réservoirs d'hydrogène sous pression (26) supplémentaires est/sont disposé(s) par rapport à une direction de marche avant au moins en partie derrière un essieu arrière, de préférence d'une semi-remorque (14) ou d'une remorque.

5. Attelage de véhicule utilitaire (10) ou véhicule utilitaire (12) selon l'une quelconque des revendications précédentes, dans lequel :
une semi-remorque (14) ou une remorque présente le châssis en échelle (20) ; ou
un poids lourd, de préférence un véhicule de train routier articulé ou un véhicule de camion remorque, présente le châssis en échelle (20).

6. Attelage de véhicule utilitaire (10) ou véhicule utilitaire (12) selon l'une quelconque des revendications précédentes, présentant en outre :
un dispositif de pile à combustible (16) qui est en communication fluidique avec ledit un ou les plusieurs réservoirs d'hydrogène sous pression (24) et est réalisé pour générer de l'énergie électrique ; et
un dispositif de moteur électrique (18) qui est relié au dispositif de pile à combustible (16) pour absorber de l'énergie électrique et réalisé pour entraîner l'attelage de véhicule utilitaire (10) ou le véhicule utilitaire (12), dans lequel de préférence :
le dispositif de pile à combustible (16) et le dispositif de moteur électrique (18) constituent la seule source d'entraînement du véhicule utilitaire (12) ou de l'attelage de véhicule utilitaire (10).

7. Attelage de véhicule utilitaire (10) ou véhicule utilitaire (12) selon la revendication 6, dans lequel :
le dispositif de pile à combustible (16) est disposé au-dessous d'une cabine de conducteur du véhicule utilitaire (12) ou d'un véhicule de train routier articulé de l'attelage de véhicule utilitaire (10) ou d'un véhicule de camion remorque de l'attelage de véhicule utilitaire (10) ; et/ou
le dispositif de moteur électrique (18) est disposé entre des roues d'un essieu arrière du véhicule utilitaire (12) ou d'un véhicule de train routier articulé de l'attelage de véhicule utilitaire (10) ou d'un véhicule de camion remorque de l'attelage de véhicule utilitaire (10).

8. Attelage de véhicule utilitaire (10) selon l'une quelconque des revendications précédentes, dans lequel :
l'attelage de véhicule utilitaire (10) est réalisé sous la forme d'un train routier articulé avec un véhicule de train routier articulé (12) et une semi-remorque (14) ;
la semi-remorque (14) le châssis en échelle (20), ledit un ou les plusieurs réservoirs d'hydrogène sous pression (14), et de préférence :
le véhicule de train routier articulé (12) présente un ou plusieurs autres réservoirs d'hydrogène sous pression (28) supplémentaires, de préférence entre un essieu avant du véhicule de train routier articulé (12) et un essieu arrière du véhicule de train routier articulé (12) et/ou au-dessous d'un châssis du véhicule de train routier articulé (12).

9. Attelage de véhicule utilitaire (10) selon la revendication 8, dans lequel :
le ou les autres réservoirs d'hydrogène sous pression (28) supplémentaires dépassent de deux longerons principaux parallèles d'un châssis à échelle (20) de la semi-remorque (14) dans une direction transversale de l'attelage de véhicule utilitaire (10), de préférence des deux côtés ; et/ou
le ou les autres réservoirs d'hydrogène sous pression (28) supplémentaires présentent globalement un volume de 1,5 m³, et sont de préférence conçus pour une pression de stockage jusqu'à 300 bar ou 350 bar.

10. Attelage de véhicule utilitaire selon la revendication 8 ou 9, dans lequel :
à la fois ledit un ou les plusieurs réservoirs d'hydrogène sous pression (24) et ledit un ou les plusieurs réservoirs d'hydrogène sous pression (26) supplémentaires sont disposés par rapport à une direction de marche avant exclusivement devant un essieu arrière de la semi-remorque (14), de préférence dans tout l'espace entre la partie arrière du véhicule de train routier articulé (12) et des essieux de roue de la semi-remorque (14), et/ou présentent globalement un volume de 6 m³, de préférence de 6,5 m³, et sont de préférence conçus pour une pression de stockage jusqu'à 350 bar ou 300 bar ; ou
à la fois ledit un ou les plusieurs réservoirs d'hydrogène sous pression (24) et ledit un ou les plusieurs réservoirs d'hydrogène sous pression (26) supplémentaires sont disposés par rapport à une direction de marche avant en partie devant, de préférence dans tout l'espace entre une partie arrière du véhicule de train routier articulé (12) et des essieux de roue de la semi-remorque (14), et en partie derrière un essieu arrière de la semi-remorque (14) et/ou présentent globalement un volume de 9 m³, de préférence de 9,4 m³, et sont de préférence conçus pour une pression de stockage jusqu'à 350 bar ou 300 bar.

11. Attelage de véhicule utilitaire (10) selon l'une quelconque des revendications 8 à 10, dans lequel :
le tracteur routier (12) présente le dispositif de pile à combustible (16) et le dispositif de moteur électrique (18), de préférence comme une source d'entraînement unique du tracteur routier (12).

12. Attelage de véhicule utilitaire (10) selon l'une quelconque des revendications précédentes ou véhicule utilitaire (12) selon l'une quelconque des revendications 1 à 7, présentant en outre :
une conduite flexible de raccordement d'hydrogène sous haute pression (34) qui est ou peut être raccordée entre un embout de raccordement (36) fixé au véhicule de train routier articulé et un embout de raccordement (38) fixé à la semi-remorque, de préférence par des raccords à fermeture automatique.

13. Attelage de véhicule utilitaire (10) ou véhicule utilitaire (12) selon la revendication 12, dans lequel :
en marche avant, la conduite flexible de raccordement d'hydrogène sous haute pression (34) présente une forme de U couchée et/ou hélicoïdale ; et/ou
l'embout de raccordement (36) fixé au véhicule de train routier articulé et l'embout de raccordement (38) fixé à la semi-remorque sont disposés avec une différence de niveau l'un par rapport à l'autre, de préférence l'embout de raccordement (38) fixé à la semi-remorque étant disposé plus haut que l'embout de raccordement (36) fixé au véhicule de train routier articulé, et/ou
la conduite flexible de raccordement d'hydrogène sous haute pression (34), l'embout de raccordement (36) fixé au véhicule de train routier articulé et/ou l'embout de raccordement (38) fixé à la semi-remorque sont disposés de manière directement contiguë ou adjacente à une sellette d'attelage (30) du véhicule de train routier articulé (12) et/ou de la semi-remorque (14) .
